# EUROPÄISCHE PATENTANMELDUNG

(11) **EP 1 767 744 A1**
(43) Veröffentlichungstag der Anmeldung: **28.03.2007**
(21) Anmeldenummer: 05020704.2
(22) Anmeldetag: 22.09.2005
(51) Int. Cl.: F01D 5/20, F01D 5/22, B23K 10/02, F16J 15/447

(54) **Turbinenschaufeln mit Deckplatten, die mit einer aufgeschweissten Hartschicht versehen sind sowie Herstellungsverfahren**

(71) Anmelder: SIEMENS AKTIENGESELLSCHAFT, 80333 München (DE)
(72) Erfinder: Kretschmer, Michael, Dr., 52072 Aachen (DE)

(57) **Zusammenfassung**

Es wird eine Strömungsmaschine (1) mit einem rotierbaren Segment, dem Laufschaufeln (2) zugeordnet sind, und mit einem stationären Segment (8), dem Leitschaufeln zugeordnet sind vorgestellt. Zumindest eine der Laufschaufeln (2) und Leitschaufeln weist an ihren jeweiligen Schaufelspitzen (3) eine Deckplatte (4) auf, die mit einer Dichtfläche (6) zu einem gegenüberliegenden Dichtelement (7) orientiert ist. Die Dichtfläche (6) weist zumindest bereichsweise eine Hartschicht (16 bzw. 17) auf, die stoffschlüssig mit der Deckplatte (4) verbunden ist. Des weiteren wird die Verwendung der Hartschicht (16 bzw. 17) in der Strömungsmaschine (1) und die Herstellung der Hartschicht (16 bzw. 17) auf der Deckplatte (4) offenbart.

## Beschreibung

Die Erfindung betrifft eine Strömungsmaschine mit einem rotierbaren Segment, dem Laufschaufeln zugeordnet sind, und mit einem stationären Segment, dem Leitschaufeln zugeordnet sind, wobei zumindest eine der Laufschaufeln und Leitschaufeln an ihren jeweiligen Schaufelspitzen eine Deckplatte aufweist, die mit einer Dichtfläche zu mindestens einem gegenüberliegenden Dichtelement orientiert ist.

Derartige Strömungsmaschinen sind zum Beispiel als Verdichter, Dampfturbine oder Gasturbine bekannt. Die Strömungsmaschine weist einen um eine Rotationsachse drehbar gelagerten Rotor auf, an dem die Laufschaufel verankert ist. Ein stationäres Bauteil ist derart angeordnet, dass ein Radialspalt zwischen der Laufschaufelspitze und dem stationären Bauteil entsteht. Das stationäre Bauteil kann beispielsweise als Innengehäuse ausgestaltet sein. Dem Innengehäuse ist die Leitschaufel zugeordnet, so dass das Innengehäuse als Leitschaufelträger ausgestaltet ist. Auch zwischen der Leitschaufelspitze und einer Rotorwelle kann ein Radialspalt entstehen.

In der Strömungsmaschine strömt ein Strömungsmedium im Wesentlichen entlang der Rotationsachse an der Laufschaufel vorbei. Die Strömung des Strömungsmediums umfasst eine Verlustströmung, die sich entlang des Radialspaltes ausbildet. Die Verlustströmung kann auch als Spaltverlust bezeichnet werden. Die Spaltverluste entstehen beispielsweise dadurch, dass das Strömungsmedium nicht seinen vorgegebenen Weg durch das durch die hintereinander angeordneten Laufschaufeln und Leitschaufeln gebildete Schaufelgitter folgt, sondern zwischen Schaufelspitze und der jeweiligen Dichtfläche bzw. dem Radialspalt hindurchströmt. Dies führt zu einer Reduzierung der technischen Arbeit und somit zu einem geringeren Wirkungsgrad der Strömungsmaschine.

Leit- bzw. Laufschaufeln weisen an ihren Spitzen Verbindungselemente oder Deckplatten auf. Die Deckplatten können mit der jeweiligen Schaufel vernietet sein oder direkt aus demselben Werkstück wie der Rest der Schaufel gefertigt (einstückig) sein. Die Deckplatten der Schaufeln müssen gleichzeitig (ggf. in Zusammenwirkung mit anderen Komponenten) eine Dichtfunktion wahrnehmen. Dazu kommen in vielen Fällen Dichtelemente, beispielsweise so genannte Dichtbänder (in Rotorwelle oder Gehäuse oder Schaufeldeckband befestigte Metallstreifen) zum Einsatz, die einerseits den Radialspalt zwischen rotierendem und stationärem Segment minimieren, andererseits Notlaufeigenschaften sicherstellen, wenn sich das rotierende und stationäre Segment näher als geplant aneinander annähern. In diesem Fall kommen erst die dünnen Dichtbänder, die sich auch relativ leicht abtragen lassen sollen, in Kontakt mit dem jeweils anderen Bauteil bzw. der Deckplatte. Damit werden größere Schäden beispielsweise an der jeweiligen Schaufel selbst vermieden.

Eine Voraussetzung für die Funktion dieser Notlaufeigenschaft ist ein geeignetes Reibverhalten zwischen dem Dichtband und der Deckplatte als Gegenstück.

Als ein Hauptnachteil ist anzusehen, dass das Dichtbandmaterial und das Schaufelmaterial bzw. das Deckplattenmaterial möglicherweise nicht ein erforderliches Reibverhalten aufweisen und dass unter Umständen die Deckplatten der Schaufeln, durch den Kontakt mit den Dichtbändern, zerstört werden können. Zudem sind die Radialspiele bzw. der Radialspalt relativ groß gemessen, so dass für kritische Materialpaarungen in allen Betriebszuständen ein Kontakt der sich gegenüberliegenden Komponenten bzw. des Dichtbandes zur Deckplatte (Anstreifen) vermieden ist. In Folge der Radialspielerhöhung bzw. des Radialspaltes tritt aber nachteiligerweise eine Verringerung des Wirkungsgrades der Strömungsmaschine auf.

Der Erfindung liegt die Aufgabe zugrunde, eine Strömungsmaschine der eingangs genannten Art mit einfachen Mitteln dahin gehend zu verbessern, dass der Wirkungsgrad der Strömungsmaschine erhöht wird, wobei gleichzeitig ein Anstreifen keinerlei Schäden an der Beschaufelung zur Folge haben soll.

Erfindungsgemäß wird die Aufgabe dadurch gelöst, dass die Dichtfläche zumindest bereichsweise eine Hartschicht aufweist, die stoffschlüssig mit der Deckplatte verbunden ist.

Zur stoffschlüssigen Verbindung der Hartschicht auf die Dichtfläche der Deckplatte ist es zweckmäßig im Sinne der Erfindung, wenn die Hartschicht auf die Deckplatte aufgeschweißt ist, wobei die Hartschicht günstiger Weise mittels des Plasma-Pulver-Auftragschweißens auf die Deckplatte aufgeschweißt ist.

Der Erfindung liegt die Erkenntnis zugrunde, dass ein Aufbringen abrasiver Schichten, welches üblicherweise keine Hartschichten sind, nicht geeignet ist, den Wirkungsgrad der Strömungsmaschine zu verbessern bzw. eine Beschädigung der Strömungsmaschine zu vermeiden. Des Weiteren erzeugt eine Bedampfung, eine Oberflächenhärtung, ein Nitrieren, ein Borieren usw. keine signifikanten Schichtdicken in Radialrichtung gesehen und sind insbesondere teilweise in Kombination mit bestimmten Werkstoffen, wie z. B. Nickel-Basiswerkstoffen nicht möglich. Mittels des erfindungsgemäßen stoffschlüssigen Verbindens der Hartschicht mit der Dichtfläche der Deckplatte, insbesondere mittels der Aufschweißung mit Hilfe des Plasma-Pulver-Auftragsschweißens dagegen ist gewährleistet, dass die Hartschicht, die auch als Schutzschicht bezeichnet werden kann, auch den hohen mechanischen Belastungen in Folge der hohen Rotationsgeschwindigkeit standhalten kann. Zudem ist die schweißtechnische Herstellung der Hartschicht bzw. der Schutzschicht äußerst kostengünstig, wobei durch die Möglichkeit der Beschichtung im fertig zusammengebauten Zustand der jeweiligen Schaufelstufen eine nachträgliche Nachrüstung an bestehenden Anlagen gegeben ist. Darüber hinaus wird durch die nachträgliche Integration der Deckplattenhartschicht die Betriebssicherheit der nachgerüsteten Anlagen erhöht.

Es hat sich bei der Anwendung des Plasma-Pulver-Auftragsschweißens bei der Aufbringung der Hartschicht auf die Deckplatte der Strömungsmaschine überraschenderweise gezeigt, dass eine geringe Aufmischung bei gleichzeitig äußerst geringer Wärmeeinbringung in das jeweilige Werkstück (Schaufel bzw. Deckplatte) erreichbar ist. Aufgrund der geringen Wärmeeinbringung kann der Auftrag der Hartschicht bzw. der Schutzschicht im fertig montierten Zustand der jeweiligen Schaufelstufe erfolgen.

Um die Wärmeeinbringung in die Schaufeln und die damit verbundenen Probleme des Verzuges, der Eigenspannungen und der Gefügeveränderungen weiter zu minimieren, ist es zweckmäßig im Sinne der Erfindung, wenn die Hartschicht als Schweißraupe mit ihrer in einer Strömungsrichtung gesehen ausgeführten Breite an ein axiales Spiel der Segmente der Strömungsmaschine in einer Strömungsrichtung gesehen angepasst ist. Damit wird vorteilhaft nur der Bereich der Deckplatte mit der Hartschicht versehen, der bei einem vorgegebenen möglichen axialen Spiel der Segmente zueinander in Kontakt mit dem Dichtelement bzw. dem Dichtband geraten kann.

Um eine ausreichende Lebensdauer der Hartschicht gewährleisten zu können, ist es günstig im Sinne der Erfindung, wenn die Hartschicht als Schweißraupe in Radialrichtung gesehen eine Dicke von mind. 1 mm aufweist, wenn die Hartschicht auf die Deckplatte aufgetragen wurde. Damit wird gewährleistet, dass auch bei einem kompletten Abtrag des gegenüberliegenden Dichtbandes bzw. Dichtelementes das Grundmaterial der Deckplatten nicht beschädigt werden kann, da die Hartschicht bzw. Schutzschicht von vornherein eine ausreichende Dicke in Radialrichtung aufweist.

Vorteilhaft ist vorgesehen, dass die Hartschicht aus einer Kobalt-Basislegierung besteht, wobei die Hartschicht bevorzugt aus einem Werkstoff mit der Bezeichnung Stellit 6 mit nachfolgender beispielhafter chemischer Zusammensetzung
Co: Bal.
Ni: Max.
FE: Max
C: 1.2
Cr: 28
MN:1
Si: 1.1
W:4.5
besteht. Möglich ist aber auch, dass die Hartschicht aus einer Nickel-Basislegierung besteht.

Mittels der erfindungsgemäßen Ausgestaltung der Hartschicht bzw. der Schutzschicht entsteht eine Reibpaarung der sich gegenüberstehenden Hart- bzw. Schutzschicht mit dem Dichtelement bzw. Dichtband mit einem äußerst geeigneten Reibverhalten. Dabei können die vorhandenen Radialspiele geringer ausgeführt werden, da bei einem Kontakt des Dichtelements mit der Schutz- bzw. Hartschicht günstige Notlaufeigenschaften erreicht werden, d. h. bei Kontakt des Dichtbandes mit der Hartschicht ist sicher gewährleistet, dass sich das Dichtband abarbeitet. Somit können sich die Dichtbänder nicht mehr in die Deckplatte einarbeiten und diese zerstören. Durch die hohe Härte der Hartschicht bzw. der Schutzschicht ist auch gewährleistet, dass bei wiederholtem Anstreifen keinerlei Schäden an der Beschaufelung auftreten. Durch die mögliche Reduzierung der Radialspiele lassen sich vorteilhaft bessere Wirkungsgrade realisieren als wenn die Radialspiele beispielsweise so groß ausgeführt werden, dass unter gar keinen Umständen ein Kontakt auftreten kann. Darüber hinaus ist durch die schweißtechnische Herstellung der Hartschicht bzw. der Schutzschicht gewährleistet, dass die Anbindungen an die Deckplatte der Turbinenschaufeln auch den hohen mechanischen Belastungen in Folge der hohen Rotationsgeschwindigkeit des rotierbaren Segments im Betrieb standhalten können. Durch die Möglichkeit der Beschichtung im fertig zusammengebauten Zustand der Schaufelstufe ist eine nachträgliche Nachrüstung an bestehende Anlagen gegeben, wobei auch eine Verbesserung des Wirkungsgrades bestehender Anlagen möglich wird. Darüber hinaus wird durch die nachträgliche Integration der Deckplattenhartschicht die Betriebssicherheit der nachgerüsteten Anlage erhöht.

Die Hartschicht eignet sich somit besonders zur Verwendung auf der Dichtfläche der Deckplatten von Schaufeln von Strömungsmaschinen.

Selbstverständlich kann die Deckplatte mit ihrer Dichtfläche zum Dichtelement bzw. zum Dichtband hin im Querschnitt gesehen beliebig, z. B. glatt oder gestuft ausgeführt sein.

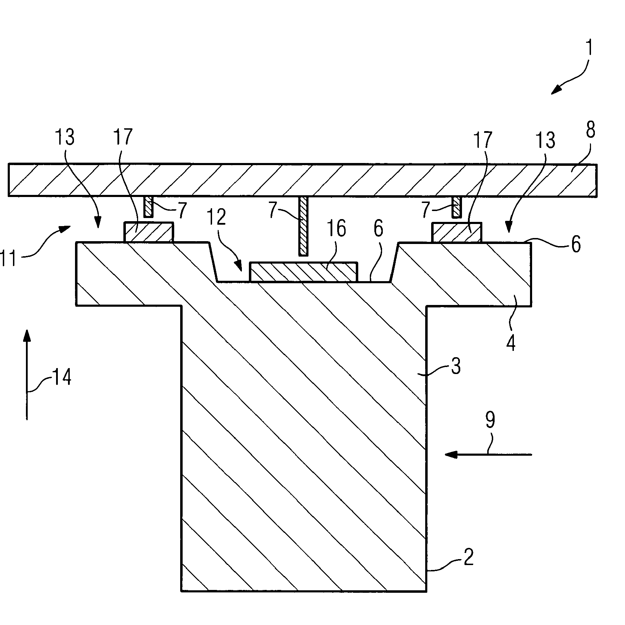

Weitere vorteilhafte Ausgestaltungen sind in den Unteransprüchen und der folgenden Figurenbeschreibung offenbart. Es zeigt die einzige
- Fig. 1: eine Ansicht auf eine Schaufel mit erfindungsgemäßer Hartschicht.

Figur 1 zeigt einen Ausschnitt aus einer Strömungsmaschine 1. In dem gewählten Ausschnitt ist eine Laufschaufel 2 mit ihrer Laufschaufelspitze 3 dargestellt, die einem nicht dargestellten rotierbaren Segment zugeordnet ist. An der Laufschaufelspitze 3 ist eine Deckplatte 4 angeordnet, die mit ihrer Dichtfläche 6 zu gegenüberliegenden, in diesem Fall drei Dichtelementen 7 orientiert ist. Natürlich kann auch nur ein Dichtelement 7 vorgesehen sein. Die Deckplatte 4 ist bei dem dargestellten Ausführungsbeispiel einstückig mit der Laufschaufel 2 hergestellt bzw. ist aus demselben Werkstück gefertigt wie die Laufschaufel 2. Das Dichtelement 7 ist in einem stationären Segment 8 der Strömungsmaschine 1 befestigt.

Das rotierbare Segment ist als Rotor der Strömungsmaschine 1 ausgestaltet und weist eine Rotorwelle auf, mit der die Laufschaufel 2 über ihren zur Laufschaufelspitze 3 gegenüberliegenden Laufschaufelfuß hinreichend verbunden ist. Das stationäre Segment 8 ist als Leitschaufelträger bzw. als Innengehäuse ausgestaltet, in dem die Leitschaufel mit ihrem Leitschaufelfuß hinreichend befestigt ist. Üblicher Weise weist die Strömungsmaschine 1 eine Vielzahl von in einer in Figur 1 beispielhaft dargestellten Strömungsrichtung 9 eines Mediums hintereinander abwechselnd folgenden Leit- und Laufschaufeln auf, so dass ein Schaufelgitter bzw. eine Turbinenstufe gebildet ist, wobei zwischen der Laufschaufelspitze 3 bzw. der Deckplatte 4 und dem stationären Segment 8 ein radialer Spalt 11 gebildet ist. Das Dichtelement 7 bewirkt eine Abdichtung von Gebieten unterschiedlichen Drucks in der Strömungsmaschine 1 und ist in dem radialen Spalt 11 angeordnet.

Selbstverständlich kann auch die Leitschaufel an ihrer Leitschaufelspitze eine Deckplatte aufweisen, die mit ihrer Dichtfläche in Richtung zu der gegenüberliegenden Rotorwelle orientiert ist, in der ein entsprechendes Dichtelement eingesetzt ist.

Im Folgenden und im zuvor beschriebenen wird die Erfindung lediglich mittels des gewählten Ausschnitts erläutert, wobei gleiches natürlich auch für die nicht dargestellte Leitschaufel bzw. weitere Schaufeln der Strömungsmaschine anwendbar ist.

Die Dichtfläche 6 der Deckplatte 4 ist in dem dargestellten Ausführungsbeispiel im Querschnitt gesehen stufenförmig ausgeführt und weist einen Mittelabschnitt 12 mit in Strömungsrichtung 9 gesehen jeweils seitlich angeordneten Außenabschnitten 13 auf. Die Außenabschnitte 13 gehen über leicht geneigte Innenseiten in den Mittelabschnitt 12 über, wobei die Innenseiten aber natürlich auch in einem senkrechten Winkel zur Dichtfläche 6 des Mittelabschnitts 12 angeordnet sein können. Die Außenabschnitte 13 der Dichtfläche 6 sind in einer radialen Richtung 14 gesehen höher als der Mittelabschnitt 12 angeordnet. Damit weist der radiale Spalt 11 bezogen auf die Dichtfläche 6 im Bereich der Außenabschnitte 13 in radialer Richtung 14 gesehen einen geringeren Betrag auf als im Bereich des Mittelabschnitts 12. Die Dichtfläche 6 überragt die Laufschaufel 2 mit ihren Außenabschnitten 13 in Strömungsrichtung 9 gesehen jeweils seitlich. Selbstverständlich kann die Deckplatte 4 mit ihrer Dichtfläche 6 im Querschnitt gesehen aber auch glatt, also stufenlos ausgeführt sein, so dass sich in radialer Richtung 14 gesehen bezogen auf die Dichtfläche 6 ein durchgehender Betrag des radialen Spaltes 11 ergeben würde. Möglich ist, dass bei einer glatten Ausführung der Dichtfläche 6 auch nur ein Dichtelement 7 verwendet würde.

Sowohl dem Mittelabschnitt 12 als auch den Außenabschnitten 13 ist jeweils eine Hartschicht 16, 17 zugeordnet. Die jeweilige Hartschicht 16 bzw. 17 ist stoffschlüssig mit der Dichtfläche 7 verbunden, insbesondere verschweißt. Vorzugsweise ist die jeweilige Hartschicht 16 bzw. 17 mittels des Plasma-Pulver-Auftragsschweißens (PTA) mit der Dichtfläche 6 verschweißt. Die jeweilige Hartschicht 16 bzw. 17 besteht in dem dargestellten Ausführungsbeispiel aus einer Kobalt-Basislegierung, vorzugsweise aus einem Werkstoff mit der Bezeichnung Stellit 6.

Die jeweilige Hartschicht 16 bzw. 17 erstreckt sich in radialer Richtung 14 gesehen in Richtung zum stationären Segment 8 und minimiert so den radialen Spalt 11, in dem das Dichtelement 7 angeordnet ist. In Strömungsrichtung 9 gesehen ist die jeweilige Hartschicht 16 bzw. 17 bereichsweise mit der Dichtfläche 6 verschweißt. Die Hartschicht 16 bzw. 17 weist eine in Strömungsrichtung 9 gesehen ausgeführte Schweißraupenbreite auf, die vorteilhaft an ein axiales Spiel (Strömungsrichtung 9) des stationären Segments 8 zum rotierbaren Segment angepasst ist, so dass ein Kontakt des Dichtelementes 7 mit dem nicht mit der Hartschicht 16 bzw. 17 versehenen Bereiches der Dichtfläche 6 ausgeschlossen werden kann. In dem dargestellten Beispiel ist die Hartschicht 16 auf dem Mittelabschnitt 12 aufgetragen, wobei die Hartschicht 17 jeweils auf dem Außenabschnitt 13 aufgetragen ist. Die äußere Hartschicht 17 ist in Strömungsrichtung 9 gesehen schmaler ausgeführt als die mittlere Hartschicht 16. In dem dargestellten Ausführungsbeispiel ist sowohl den beiden Außenabschnitten 13 als auch dem Mittelabschnitt 12 jeweils ein Dichtelement 7 zugeordnet. Deutlich erkennbar ist, dass sich das jeweilige Dichtelement 7 in Strömungsrichtung 9 gesehen genau mittig über der jeweiligen Hartschicht 16 bzw. 17 von dem stationären Segment 8 in Richtung zur Dichtfläche 6 erstreckt, so dass ein Kontakt des Dichtelementes 7 mit der Dichtfläche 6 auch bei einem axialen Spiel der Segmente zueinander vorteilhaft verhindert ist.

Vorzugsweise weist die jeweilige Hartschicht 16 bzw. 17 eine in radialer Richtung 14 gesehen ausgeführte Dicke von mindestens 1 mm direkt nach dem Auftragen auf die Dichtfläche 6 auf.

Das Dichtelement 7 ist in dem dargestellten Ausführungsbeispiel als Dichtband, also beispielsweise als in der Rotorwelle oder dem Innengehäuse befestigter Metallstreifen ausgeführt.

## Patentansprüche

1. Strömungsmaschine mit einem rotierbaren Segment, dem Laufschaufeln (2) zugeordnet sind, und
mit einem stationären Segment (8), dem Leitschaufeln zugeordnet sind,
wobei zumindest eine der Laufschaufeln (2) und Leitschaufeln an ihren jeweiligen Schaufelspitzen (3) eine Deckplatte (4) aufweist, die mit einer Dichtfläche (6) zu einem gegenüberliegenden Dichtelement (7) orientiert ist,
**dadurch gekennzeichnet, dass**
die Dichtfläche (6) zumindest bereichsweise eine Hartschicht (16 bzw. 17) aufweist, die stoffschlüssig mit der Deckplatte (4) verbunden ist.

2. Strömungsmaschine nach Anspruch 1,
**dadurch gekennzeichnet, dass**
die Hartschicht (16 bzw. 17) auf die Deckplatte (4) aufgeschweißt ist.

3. Strömungsmaschine nach Anspruch 1 oder 2,
**dadurch gekennzeichnet, dass**
die Hartschicht (16 bzw. 17) mittels des Plasma-Pulver-Auftragsschweißens auf die Deckplatte (4) aufgeschweißt ist.

4. Strömungsmaschine nach einem der vorhergehenden Ansprüche,
**dadurch gekennzeichnet, dass**
die Hartschicht (16 bzw. 17) als Schweißraupe mit ihrer in einer Strömungsrichtung (9) gesehen ausgeführten Breite an ein axiales Spiel der Strömungsmaschine angepasst ist.

5. Strömungsmaschine nach einem der vorhergehenden Ansprüche,
**dadurch gekennzeichnet, dass**
die Hartschicht (16 bzw. 17) als Schweißraupe eine in radialer Richtung gesehene Dicke aufweist, so dass bei einem kompletten Abtrag des gegenüberliegenden Dichtelementes (7) das Grundmaterial der Deckplatte (2) nicht beschädigt wird.

6. Strömungsmaschine nach einem der vorhergehenden Ansprüche,
**dadurch gekennzeichnet, dass**
die Hartschicht (16 bzw. 17) als Schweißraupe eine in radialer Richtung gesehene Dicke von mindestens ca. 1 mm aufweist, wenn die Hartschicht (16 bzw. 17) auf die Deckplatte (4) aufgetragen wurde.

7. Strömungsmaschine nach einem der vorhergehenden Ansprüche,
**dadurch gekennzeichnet, dass**
die Hartschicht (16 bzw. 17) aus einer Kobalt-Basislegierung besteht.

8. Strömungsmaschine nach einem der vorhergehenden Ansprüche,
**dadurch gekennzeichnet, dass**
die Hartschicht (16 bzw. 17)aus dem Werkstoff Stellit 6 gebildet ist.

9. Strömungsmaschine nach einem der Ansprüche 1 bis 6,
**dadurch gekennzeichnet, dass**
die Hartschicht (16 bzw. 17) aus einer Nickel-Basislegierung besteht.

10. Verwendung einer Hartschicht (16 bzw.17) in einer Strömungsmaschine (1) mit einem rotierbaren Segment, dem Laufschaufeln (2) zugeordnet sind, und
mit einem stationären Segment (8), dem Leitschaufeln zugeordnet sind,
wobei zumindest eine der Laufschaufeln (2) und Leitschaufeln an ihren jeweiligen Schaufelspitzen (3) eine Deckplatte (4) aufweist, die mit einer Dichtfläche (6) zu einem gegenüberliegenden Dichtelement (7) orientiert ist, insbesondere nach einem der vorhergehenden Ansprüche,
wobei die Hartschicht (16 bzw. 17) stoffschlüssig mit der Deckplatte (4) verbunden ist.

11. Verfahren zur Herstellung einer Hartschicht (16 bzw. 17) für eine Strömungsmaschine (1) mit einem rotierbaren Segment, dem Laufschaufeln (2) zugeordnet sind, und
mit einem stationären Segment (8), dem Leitschaufeln zugeordnet sind,
wobei zumindest eine der Laufschaufeln (2) und Leitschaufeln an ihren jeweiligen Schaufelspitzen (3) eine Deckplatte (4) aufweist, die mit einer Dichtfläche (6) zu einem gegenüberliegenden Dichtelement (7) orientiert ist, insbesondere nach einem der vorhergehenden Ansprüche,
wobei die Hartschicht (16 bzw. 17) zur stoffschlüssigen Verbindung mit der Deckplatte (4)verschweißt wird.
